# EUROPEAN PATENT APPLICATION

(11) **EP 3 854 831 A1**
(43) Date of publication of application: **28.07.2021**
(21) Application number: 20153520.0
(22) Date of filing: 24.01.2020
(51) Int. Cl.: C08G 18/22, C08G 18/76, C08G 18/79, C08G 18/80, C09D 175/04, C08G 18/28, C09D 5/44

(54) **COMPOUND COMPRISING FULLY BLOCKED ISOCYANATE AND SILANE GROUPS AND ITS USE AS CROSSLINKER IN ELECTROCOATING MATERIALS**

(71) Applicant: BASF Coatings GmbH, 48165 Münster (DE)
(72) Inventor: RESSEL, Joerg, 48165 Muenster (DE); GELBRICH, Thorsten, 48165 Muenster (DE); PRZYBILLA, Silke, 48165 Muenster (DE); GEUTING, Martin, 48165 Muenster (DE); JUETTEMEYER, Janine, 48165 Muenster (DE); BENNING, Dirk, 48165 Muenster (DE); DIEKMANN, Hildegund, 48317 Drensteinfurt (DE)
(74) Representative: BASF IP Association

(57) **Abstract**

The present invention relates to a method to produce a compound (X) comprising fully blocked isocyanate groups as well as at least one silane group, the compound (X) obtained by the inventive method and its use as crosslinker in aqueous electrocoating materials. Finally, the present invention relates to aqueous electrocoating materials containing the inventive compound (X) as crosslinker.

## Description

The present invention relates to a method to produce a compound (X) comprising fully blocked isocyanate groups as well as at least one silane group, the compound (X) obtained by the inventive method and its use as crosslinker in aqueous electrocoating materials. Finally, the present invention relates to aqueous electrocoating materials containing the inventive compound (X) as crosslinker.

### State of the art

A normal requirement within the automobile sector is that the metallic components used for manufacture must be protected against corrosion. The requirements concerning the corrosion prevention to be achieved are very stringent, especially as the manufacturers often give a guarantee against rust perforation over many years. Such corrosion prevention is normally achieved by coating the components, or the substrates used in their manufacture, with at least one coating apt for the purpose, typically an electrodeposition coating.

The electrodeposition process can be anodic or cathodic; typically, the article to be coated serves as the cathode. Electrodeposition processes are advantageous both economically and environmentally due to the high transfer efficiency of coating resin to the substrate and the low levels of organic solvent, if any, that are employed. Another advantage of electrocoat compositions and processes is that the applied coating composition forms a uniform and contiguous layer over a variety of metallic substrates regardless of shape or configuration. This is especially advantageous when the coating is applied as an anticorrosive coating onto a substrate having an irregular surface, such as a motor vehicle body. The even and continuous coating layer formed over all portions of the metallic substrate provides maximum anticorrosion effectiveness.

Electrocoating baths typically comprise an aqueous dispersion or emulsion of a film-forming material, such as an epoxy resin, having ionic stabilization. A dispersion is typically a two-phase system of one or more finely divided solids, liquids, or combinations thereof in a continuous liquid medium such as water or a mixture of water and organic cosolvent. An emulsion is a dispersion of liquid droplets in a liquid medium, preferably water or a mixture of water and various cosolvents. Accordingly, an emulsion is a type of dispersion.

For automotive or industrial applications, the electrocoat compositions are formulated to be curable compositions by using self-crosslinking resins or including a crosslinker. During electrodeposition, a coating composition containing an ionically-charged resin is deposited onto a conductive substrate by submerging the substrate in an electrocoating bath having dispersed therein the charged resin and then applying an electrical potential between the substrate and a pole of opposite charge, for example, a stainless-steel electrode. The charged coating particles are plated or deposited onto the conductive substrate and the coated substrate is then heated to cure the coating.

Suitable automotive metals include cold rolled steel ("CRS"), electrogalvanized steel ("EGS"), hot dipped galvanized steel ("HDG"), galvanneal (annealed hot-dipped galvanized steel), aluminum and aluminum alloys, and other zinc-alloy coated metals. In order to improve adhesion of the electrocoat to the metal surface, the metal is typically treated with a zinc phosphate conversion coating. Zinc phosphate conversion coatings typically contain nickel which is environmentally undesirable and toxic. Recently, various techniques for eliminating the use of toxic compounds have been proposed. In particular, various silane coatings have been developed for preventing corrosion of metal substrates.

Continuing problems with cathodic electrocoating compositions have been the lack of smoothness in the cured finish, the presence of craters in the cured finish, and the lack of adhesion and edge protection or edge coverage of the composition. It is known in the state of the art to improve adhesion on the substrate, especially substrates previously treated with silane coatings, by addition of silane compounds to electrocoating compositions. In general, the silane compounds can either be added directly to the aqueous electrocoating material or the resins used in the electrocoating materials can be modified with alkoxy silanes. However, addition of alkoxy-silanes to aqueous electrocoating dispersions or bath results in coagulation because the silane will be hydrolyzed in the aqueous dispersion, thus resulting in crosslinking reactions during preparation and storage of the aqueous electrocoating dispersion or bath material. Direct silane modification of the resins used in the electrocoating dispersions with alkoxy-silanes will also result in reduced storage stability of the electrocoating bath material due to the hydrolysis and crosslinking reactions previously described.

Of advantage accordingly would be an electrocoating material which would result in an improved adhesion, mechanical strength and edge protection of the electrocoating layer on the substrate. Additionally, it is desirable that the material can be cured at low temperatures to save energy and guarantee a cost-efficient electrocoating process. The improvement of adhesion, mechanical strength and edge protection should, however, not result in a negative influence on the storage stability or the deposition process of the electrocoating material.

### Object

The object of the present invention, accordingly, was that of providing a novel compound comprising fully blocked isocyanate groups as well as at least one silane group, said compound being suitable as crosslinker in electrocoating compositions. The use of this compound as crosslinker should result in a high adhesion of the electrocoating layer on the substrate, in particular on substrates pretreated with silane compounds, and a high mechanical strength of the cured electrocoating layer. Additionally, the edge protection and edge coverage of the cured electrocoating layer should be improved. Furthermore, the use of this novel crosslinker should not negatively influence the storage stability of the electrocoating composition. Moreover, the novel crosslinker should not have a negative influence on the production process, the particle size and the filterability of electrocoating materials containing said novel crosslinker.

### Technical solution

The objects described above are achieved by the subject matter claimed in the claims and also by the preferred embodiments of that subject matter that are described in the description hereinafter.

A first subject of the present invention is therefore a method for preparing a compound (X) containing fully blocked isocyanate groups and at least one silane group, said method comprising the following steps:
(a) reacting 0.01 to 5 mol-% of the total amount of free isocyanate groups present in at least one parent structure P with at least one compound of general formula (I)

   HN[X-SiR¹ₐ(OR²)₃₋ₐ]ₙ[X'-SiR¹_{b}(OR²)_{3-b}]ₘ[R³]₂₋₍ₘ₊ₙ₎ (I)

   wherein
   - X, X': represent, independently from each other, linear and/or branched alkylene or cycloalkylene radicals having 1 to 20 carbon atoms;
   - R¹: represents an alkyl, cycloalkyl, aryl, or aralkyl group, it being possible for the carbon chain to be interrupted by nonadjacent oxygen, sulfur, or NRₐ groups, where Rₐ is alkyl, cycloalkyl, aryl, or aralkyl;
   - R²: represents hydrogen, an alkyl, or a cycloalkyl group, it being possible for the carbon chain to be interrupted by nonadjacent oxygen, sulfur or NRₐ groups, where Rₐ is alkyl, cycloalkyl, aryl, or aralkyl;
   - R³: represents a linear and/or branched alkylene or cycloalkylene radicals having 1 to 20 carbon atoms;
   - n,m: are, independently from each other, 0 to 2; and
   - a,b: are, independently from each other 0 to 2;
(b) reacting the free isocyanate groups of the parent structure P remaining after step (a) with at least one blocking agent BA to obtain the compound (X) comprising fully blocked isocyanate and silane groups; and
(c) optionally diluting the compound (X) obtained in step (b) with at least one solvent.

The above-specified method is hereinafter also referred to as method of the invention and accordingly is a subject of the present invention. Preferred embodiments of the method of the invention are apparent from the description hereinafter and also from the dependent claims.

In light of the prior art it was surprising and unforeseeable for the skilled worker that the object on which the invention is based could be achieved by functionalizing a rather low amount of isocyanate groups present in a parent structure P with a silane compound, blocking the remaining isocyanate groups with at least one blocking agent and using this compound (X) as crosslinker in aqueous electrocoating compositions. This hydrophobic crosslinker can be mixed directly with the principle aqueous cationic resin because hydrolysis and/or condensation reactions of the silane functions are prevented until curing of the coating layer due to the formation of micelles containing the hydrophobic crosslinker (X). In contrast, direct addition of silane compounds to aqueous electrocoating materials or functionalization of cationic binders contained in aqueous electrocoating materials leads to reduced storage stability because of hydrolysis and/or condensation reactions of the silane groups, thus resulting in crosslinking reactions and therefore a decreased storage stability. The use of these low amounts of silane groups in compound (X) leads to excellent adhesion of the cured electrocoating material on the substrate comprising said compound (X) as crosslinker, thus resulting in improved corrosion resistance under acidic conditions and alternating climate conditions. Additionally, an excellent edge protection is obtained with the inventive compounds (X) being used as crosslinkers in the electrocoating materials. Use of the inventive compound (X) as crosslinker in electrocoating materials does not negatively influence their storage stability, production process, particle size and filterability.

A further subject of the present invention is a compound (X) comprising fully blocked isocyanate and silane groups obtained by the inventive method.

Yet another subject of the present invention is the use of the inventive compound (X) comprising fully blocked isocyanate and silane groups as crosslinker in aqueous electrocoating materials.

A final subject of the present invention is an aqueous electrocoating material, comprising at least one binder (a) containing cationic or anionic groups and reactive functional groups which are able to undergo crosslinking reactions with unblocked isocyanate groups present in a crosslinking agent (b), the inventive compound (X) as crosslinker (b) and optionally at least one additive (c).

### Detailed description

The measurement methods to be employed in the context of the present invention for determining certain characteristic variables are evident from the Examples section. Unless explicitly indicated otherwise, these measurement methods are to be used for determining the respective characteristic variable.

If reference is made in the context of the present invention to an official standard, this of course means the version of the standard that was current on the filing date, or, if no current version exists at that date, then the last current version.

All the temperatures exemplified in the context of the present invention are understood as the temperature of the room in which the coated substrate is present. What is thus not meant is that the substrate itself must have the particular temperature.

All film thicknesses reported in the context of the present invention should be understood as dry film thicknesses. It is therefore the thickness of the cured film in each case. Hence, where it is reported that a coating material is applied at a particular film thickness, this means that the coating material is applied in such a way as to result in the stated film thickness after curing.

### Inventive method:

According to the inventive method, a compound (X) containing fully blocked isocyanate as well as at least one silane group is prepared by reacting an isocyanate containing parent structure P with at least one specific silane compound and blocking the remaining free isocyanate groups with at least one blocking agent.

### Step (a):

In step (a) of the inventive method, 0.01 to 5 mol-% of the total amount of free isocyanate groups present in at least one parent structure P are reacted with a specific silane containing compound of general formula (I). Reaction of the parent structure P with the silane compound of general formula (I) before addition of further blocking agents BA guarantees a quantitative coupling of the silane compound to the parent structure P. In step (a), the silane compound can be added to the at least one parent structure P or *vice versa.* Addition of the silane compound or the parent structure P can be done by adding the total amount necessary to achieve the stated chemical conversion of the NCO groups of the parent structure. However, the silane compound or parent structure P can also be added in portions until the total amount necessary to achieve the stated chemical conversion of the NCO groups of the parent structure is achieved.

Preference is given to parent structures P which have an average isocyanate functionality of 2 to 6, preferably of 2 to 5, more preferably of 2 to 4, very preferably of 2.5 to 3.

Polyisocyanates which can be used as parent structure (P) are all known polyisocyanates, not only aliphatic but also aromatic polyisocyanates or mixtures of aromatic and aliphatic polyisocyanates. It is possible here to use not only monomeric polyisocyanates, dimers or trimers of the polyisocyanates, but also oligomeric or polymeric polyisocyanates. Preferred isocyanates are those whose monomeric constituent contains about 3 to about 36, more particularly about 8 to about 15 carbon atoms. Examples of suitable such monomeric polyisocyanates are diisocyanates such as trimethylene diisocyanate, tetramethylene diisocyanate, pentamethylene diisocyanate, hexamethylene diisocyanate, propylene diisocyanate, ethylethylene diisocyanate, methyltrimethylene diisocyanate, trimethylhexamethylene diisocyanate, xylylene diisocyanate, 1,3-cyclopentylene diisocyanate, 1,4-cyclohexylene diisocyanate, 1,2-cyclohexylene diisocyanate, 4,4'-diphenylmethane diisocyanate, 1,5-naphthylene diisocyanate, toluene 2,4-diisocyanate, isophorone diisocyanate, and 4,4'-diisocyanatodicyclohexylmethane. Polyisocyanates of higher isocyanate functionality can also be used, such as tris(4-isocyanatophenyl)methane, 2,4,4'-triisocyanatodiphenylmethane, or bis(2,5-diisocyanato-4-methylphenyl)methane. These polyisocyanates may also be used in the form of the dimer or trimer, or may serve as building blocks for oligomeric or polymeric polyisocyanates. Furthermore, mixtures of polyisocyanates can also be utilized. Preferably, that the at least one parent structure P is selected from the group consisting of (i) aromatic, aliphatic, cycloaliphatic or heterocyclic polyisocyanates; (ii) polyisocyanates derived from said aromatic, aliphatic, cycloaliphatic or heterocylic polyisocyanates by trimerization, dimerization, urethane formation, biuret formation, uretdione formation and/or allophanate formation; and (iii) mixtures thereof, very preferably aromatic polyisocyanates.

Particularly preferred parent structures P are thus aromatic polyisocyanates. Said aromatic polyisocyanates favorably have the general formula (II) 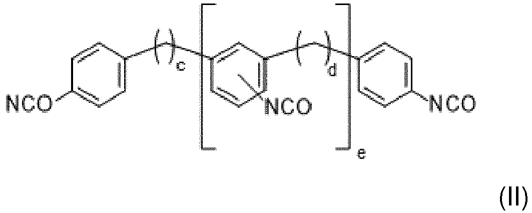 wherein
- c, d: are, independently from each other, integral numbers of 1 to 5, preferably 1 to 3, very preferably 1; and
- e: is 0 to 4, preferably 0 or 1 to 4.

Particularly good results have been achieved if the parent structure P is a mixture of a first polyisocyanate P1 and a second polyisocyanate P2, the first polyisocyanate P1 being different from the second polyisocyanate P2. However, both polyisocyanates P1 and P2 are favorably selected from aromatic polyisocyanates.

In this regard, it is preferred if the mixture of polyisocyanate P1 and P2 contains a monomeric aromatic polyisocyanate and a polymeric aromatic polyisocyanate. Thus, the first polyisocyanate P1 is preferably a polyisocyanate of general formula (II) with c = 1 and e = 0 and the second polyisocyanate P2 is a polyisocyanate of general formula (II) with c = d = 1 and e = 1 to 4. Said mixture of monomeric and polymeric 4,4'-diphenylmethane diisocyanate (MDI) is commercially available, for example as Lupranat M20S from BASF.

The silane compound used in step (a) has the general formula (I), wherein X, X', R¹ to R³, a, b, m and n have the aforementioned meanings.

X and X' in formula (I) preferably represent, independently from each other, a linear alkylene radical having 1 to 10, preferably 1 to 6, more preferably 2 to 5, very preferably 3, carbon atoms.

R² in formula (I) preferably represent, independently from each other, a C₁-C₁₀ alkyl group, preferably a C₁-C₆ alkyl group, very preferably a C₁ alkyl group.

R³ in formula (I) preferably represents a linear C₁-C₁₀ alkyl group, preferably a linear C₁-C₆ alkyl group, very preferably a linear C₄ alkyl group.

Integers m and n in formula (I) favorably are, independently from each other, 1 or in that m in formula (I) is 1 and n in formula (I) is 0.

Integers a and b in formula (I) favorably are, independently from each other, 0.

Particularly preferred silane containing compounds are thus compounds of general formula (I)

HN[X-SiR¹ₐ(OR²)₃₋ₐ]ₙ[X'-SiR¹_{b}(OR²)_{3-b}]ₘ[R³]₂₋₍ₘ₊ₙ₎ (I)

wherein
- X and X': independently from each other, are a linear alkylene radical having 1 to 10, preferably 1 to 6, more preferably 2 to 5, very preferably 3, carbon atoms;
- R²: independently from each other, are a C₁-C₁₀ alkyl group, preferably a C₁-C₆ alkyl group, very preferably a C₁ alkyl group;
- R³: is a linear C₁-C₁₀ alkyl group, preferably a linear C₁-C₆ alkyl group, very preferably a linear C₄ alkyl group;
- m and n: independently from each other, are 0 to1; and
- a and b: independently from each other, are 0.

Compounds (X) obtained according to the inventive method preferably comprise only a small amount the silane containing compound. Thus, preferably 0.5 to 4.5 mol-%, more preferably 0.5 to 4 mol-%, even more preferably 0.5 to 3. mol-%, very preferably 0.7 to 2.5 mol-%, of the total amount of free isocyanate groups present in the at least one parent structure P are reacted in this step with the compound of general formula (I). Surprisingly, only the use of small amounts of silane containing compound of general formula (I) leads to improved corrosion resistance and edge coverage while higher amounts result in reduced corrosion resistance and edge protection.

The reaction between the free NCO groups of parent structure P and silane containing compound of general formula (I) is preferably catalyzed by a bismuth catalyst of general formula (III)

Si[OOC(C_{c}H_{2c+1})]₃ (III)

wherein
c is 5 to 15, preferably 7 to 13, very preferably n = 7.

The carboxylate radicals are preferably branched, and very preferably have a tertiary or quaternary, preferably quaternary, carbon atom in the alpha-position to the carbon atom of the carboxylate group. Among the bismuth carboxylates, bismuth trineodecanoate in particular has emerged as being especially suitable.

The bismuth carboxylates are preferably used in stabilized form in combination with the parent carboxylic acid of the carboxylate, namely HOOC(C_{c}H_{2c+1}), in which c possesses the definition indicated above. Apart from functioning as stabilizer, the free carboxylic acid may also serve as a catalysis promoter.

After step (a) of the inventive method, the free NCO groups of the parent structure P are partially blocked with the silane containing compound of general formula (I), i.e. the parent structure P still contains free NCO groups after step (a) of the inventive method.

### Step (b):

In step (b) of the inventive method, the free isocyanate groups remaining after step (a) are fully blocked with at least one blocking agent BA to obtain compound (X) containing fully blocked isocyanate as well as silane groups. "Fully blocked" here means that the parent structure P no longer possesses any free isocyanate groups and therefore that 100 mol-% of the isocyanate groups originally present in the parent structure P are blocked. Thus, after step (b) of the inventive method, all NCO groups of the parent structure P are blocked with the silane containing compound (I) and at least one further blocking agent BA. The at least one blocking agent BA is preferably removed at higher temperatures, thus generating free isocyanate groups in the compound (X) which can then react - apart from silane groups introduced by the compound of general formula (I) - with at least one binder present in the electrocoating material to achieve crosslinking during curing of the applied coating layer.

In order to obtain a compound (X) containing fully blocked isocyanate groups after step (b) of the inventive process, it is preferred if 95 to 99.99 mol-%, preferably 95.5 to 99.5 mol-%, more preferably 96 to 99.5 mol-%, even more preferably 97 to 99.5 mol-%, very preferably 97.5 to 99.3 mol-% of the total amount of free isocyanate groups present in the parent structure P are reacted in step (b) with at least one blocking agent BA. Use of the at least one blocking agent BA in the stated amounts in step (b) ensures that the free isocyanates remaining after step (a) of the inventive process are fully blocked by the at least one blocking agent BA.

Examples of suitable blocking agents BA are
- phenols, such as phenol, cresol, xylenol, nitrophenol, chlorophenol, ethylphenol, tert-butylphenol, hydroxybenzoic acid, esters of this acid or 2,5-di-tert-butyl-4-hydroxytoluene;
- lactams, such as ε-caprolactam, δ-valerolactam, γ-butyrolactam or β-propiolactam;
- active methylenic compounds, such as diethyl malonate, dimethyl malonate, methyl or ethyl acetoacetate or acetylacetone;
- alcohols such as methanol, ethanol, n-propanol, isopropanol, n-butanol, isobutanol, tert-butanol, n-amyl alcohol, tert-amyl alcohol, lauryl alcohol, ethylene glycol monomethyl ether, ethylene glycol monoethyl ether, ethylene glycol monobutyl ether, diethylene glycol monomethyl ether, diethylene glycol monoethyl ether, propylene glycol monomethyl ether, methoxymethanol, glycolic acid, glycolic esters, lactic acid, lactic esters, methylolurea, methylolmelamine, diacetone alcohol, ethylenechlorohydrin, ethylenebromohydrin, 1,3-dichloro-2-propanol, 1,4-cyclohexyl-dimethanol or acetocyanohydrin;
- mercaptans such as butyl mercaptan, hexyl mercaptan, tert-butyl mercaptan, tert-dodecyl mercaptan, 2-mercaptobenzothiazole, thiophenol, methylthiophenol or ethylthiophenol;
- acid amides such as acetoanilide, acetoanisidinamide, acrylamide, methacrylamide, acetamide, stearamide or benzamide;
- imides such as succinimide, phthalimide or maleimide;
- amines such as diphenylamine, phenylnaphthylamine, xylidine, N-phenylxylidine, carbazole, aniline, naphthylamine, butylamine, dibutylamine or butylphenylamine;
- imidazoles such as imidazole or 2-ethylimidazole;
- ureas such as urea, thiourea, ethyleneurea, ethylenethiourea or 1,3-diphenylurea;
- carbamates such as phenyl N-phenylcarbamate or 2-oxazolidone;
- imines such as ethylenimine;
- oximes such as acetone oxime, formaldoxime, acetaldoxime, acetoxime, methyl ethyl ketoxime, diisobutyl ketoxime, diacetyl monoxime, benzophenone oxime or chlorohexanone oximes;
- salts of sulfurous acid such as sodium bisulfite or potassium bisulfite;
- hydroxamic esters such as benzyl methacrylohydroxamate (BMH) or allyl methacrylohydroxamate; or
- substituted pyrazoles, imidazoles or triazoles; and also
- 1,2-polyols such as ethylene glycol, propylene glycol, and 1,2-butanediol;
- 2-hydroxy esters such as 2-hydroxyethyl acrylate, 2-hydroxyethyl methacrylate; and mixtures of these blocking agents BA.

Blocking agents BA preferably used in step (b) of the inventive process are selected from the group consisting of (i) C₁-C₄ dialkyl malonates; (ii) ketoximes such as methyl ethyl ketoxime, methyl amyl ketoxime and methyl isobutyl ketoxime; (iii) alcohols such as butylglycol, dipropylene glycol methyl ether, isopropanol or *tert*-butanol; (iv) oximes such as formaldoxime, acetaldoxime, butanone oxime, cyclohexanone oxime, acetophenone oxime, benzophenone oxime or diethyl glyoxime; (v) lactams such as ε-caprolactam or δ-valerolactam; (vi) phenols such as phenol or cresol; (vii) N-alkyl amides such as N-methyl acetamide; (viii) imides such as phthalimide; (ix) imidazole; (x) C₁-C₁₂ alkyl or alkoxyalkyl esters of acetoacetic acid; (xi) pyrazoles and triazoles such as 1,2-pyrazole, 3,5-dimethyl pyrazole or 1,2,4-triazole; (xii) secondary amines such as diisopropyl amine; and (xiii) mixtures thereof, very preferably alcohols.

Particularly preferred blocking agents BA are primary and/or secondary alcohols. Therefore, a favorable embodiment of the first subject-matter of the present invention is characterized in that the at least one blocking agent BA is selected from primary and/or secondary alcohols of general formula (IV) 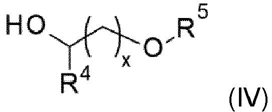 wherein
- R⁴: represents hydrogen or a C₁-C₄ alkyl residue, preferably hydrogen or a C₁ alkyl residue;
- R⁵: represents a linear or branched C₁-C₁₀ alkyl residue or a residue *-(CH₂)ₓ-CH(CH₃)-O-R⁶ attached via * to the oxygen atom, preferably a linear C₄ alkyl residue or a residue*-(CH₂)ₓ-CH(CH₃)-O-R⁶ attached via * to the oxygen atom;
- R⁶: represents a C₁-C₄ alkyl residue, preferably a C₁ alkyl residue; and
- x: is 1 to 5, preferably 1.

According to a preferred embodiment of step (b) of the inventive method, a first blocking agent BA1 and a second blocking agent BA2 are used, the blocking agent BA1 being different from the blocking agent BA2.

In this respect, it is favorable if the first blocking agent BA1 is a compound of general formula (IV) with R⁴ = H and R⁵ = C₄ alkyl and the second blocking agent BA2 is a compound of general formula (IV) with R⁴ = CH₃, R⁵ = *-(CH₂)ₓ-CH(CH₃)-O-R⁶, R⁶ = CH₃ and x = 1. Use of a combination of different blocking agents BA1 and BA2 in combination with the silane containing compound of general formula (I) results in a high corrosion resistance and excellent edge protection of cured electrocoats prepared by using said compound (X) as crosslinker.

In case two different blocking agents BA1 and BA2 are used in step (b) of the inventive method, it is preferred if 50 to 75 mol-%, preferably 60 to 70 mol-%, very preferably 66 to 69 mol-%, of the total amount of free isocyanate groups present in the at least one parent structure P are reacted in step (b) with the first blocking agent BA1.

Moreover, it is preferred if 20 to 35 mol-%, preferably 25 to 35 mol-%, very preferably 28 to 30 mol-%, of the total amount of free isocyanate groups present in the at least one parent structure P are reacted in step (b) with the second blocking agent BA2.

### Step (c):

Optional step (c) of the inventive method comprises the addition of at least one solvent to the compound (X) obtained after step (b).

The fully blocked compound (X) obtained after step (b) can optionally be diluted with at least one solvent in order to decrease the viscosity of the obtained compound for ease of handling and preparation of an aqueous electrocoating material.

In principle solvents that are suitable to prepare electrocoating materials, preferably aqueous electrocoating materials, can be used in step (c) of the inventive process.

Since the compound (X) is used in aqueous electrocoating materials, the solvent used in step (c) is preferably miscible with water or soluble in water. Particularly preferred solvents used in step (c) are selected from the group consisting of secondary alcohols and/or ethers, preferably butoxy propanol, phenoxy propanol and bis(2-(2-butoxyethoxy)ethoxy)methane.

The amount of solvent added in step (c) is depending on the desired viscosity and solids content of the diluted compound (X). Generally, said solvent is added in such amounts that a solids content of 80 to 90% is obtained (the solid content is obtained according to the method described in the examples).

### Inventive compound (X):

After step (b) or (c) of the inventive method, inventive compound (X) containing fully blocked isocyanate groups as well as at least one silane group is obtained.

The inventive compound (X) containing fully blocked isocyanate and silane groups preferably has a weight average molecular weight M_{w} of 1,000 to 2,500 g/mol, more preferably 1,200 to 2,000 g/mol, very preferably 1,300 to 1,500 g/mol, as determined by gel permeation chromatography according to ISO 13885-1:2008-08.
The number average molecular weight Mₙ of inventive compound (X) is preferably 900 to 1,500 g/mol, more preferably 950 to 1,100 g/mol, very preferably 970 to 1,050 g/mol, as determined by gel permeation chromatography according to ISO 13885-1:2008-08.

The inventive compound (X) preferably has a viscosity (60% by weight of a solution in butoxy propanol) of 200 to 350 mPa*s, very preferably of 215 to 300 mPa*s, as determined with a Brookfield CAP2000+ viscosimeter, cone plate configuration, cone CAP 03, at 23°C and a shear rate of 5,000 s⁻¹.

### Inventive use of compound (X) as crosslinker:

The inventive compound (X) is used as crosslinker in aqueous electrocoating materials.

The expression "aqueous electrocoating material" is known to the skilled person and refers to an electrocoating material which is not based exclusively on organic solvents. "Aqueous" in the context of the present invention should be understood preferably to mean that the electrocoating material comprises a water fraction of 60 to 100 wt.%, more particularly 65 to 90 wt.%, very preferably 70 to 85 wt.%, based in each case on the total weight of the electrocoating material.

Use of the inventive compound (X) as crosslinker in aqueous electrocoating materials leads to improved adhesion of the cured electrocoat to the substrate, thus resulting in enhanced corrosion resistance and edge protection compared to fully blocked isocyanate crosslinkers not comprising any silane groups.

What has been said about the preparation of the compound (X) according to the inventive method as well as inventive compound (X) applies mutatis mutandis with respect to further preferred embodiments of the inventive use of compound (X).

### Inventive electrocoating material comprising of compound (X) as crosslinker:

The inventive electrocoating material comprises:
(a) at least one binder containing cationic or anionic groups and reactive functional groups which are able to undergo crosslinking reactions with complementary reactive functional groups present in a crosslinking agent (b),
(b) at least one inventive compound (X) containing fully blocked isocyanate groups and at least one silane group as crosslinking agent and
(c) optionally at least one additive.

The binder (a) contains reactive functional groups which are able to enter into thermal crosslinking reactions with complementary reactive functional groups that are present in the compound (X). Said complementary reactive functional groups are - on the one hand - thermally deblocked isocyanate groups and - on the other hand - silane groups introduced by the compound of general formula (I). Moreover, the binder preferably contains cationic and/or potentially cationic groups such that the inventive electrocoating material are suitable as cathodically depositable electrocoat materials.

Examples of suitable potentially cationic groups which can be converted into cations by neutralizing agents and/or quaternizing agents are primary, secondary or tertiary amino groups, secondary sulfide groups or tertiary phosphine groups, more particularly tertiary amino groups or secondary sulfide groups. Examples of suitable cationic groups are primary, secondary, tertiary or quaternary ammonium groups, tertiary sulfonium groups or quaternary phosphonium groups, preferably quaternary ammonium groups or tertiary sulfonium groups, but more particularly quaternary ammonium groups.

Examples of suitable neutralizing agents for the potentially cationic groups are organic and inorganic acids such as sulfuric acid, hydrochloric acid, phosphoric acid, formic acid, acetic acid, lactic acid, dimethylolpropionic acid, citric acid or sulfonic acids, such as amidosulfonic acids and alkanesulfonic acids, such as methanesulfonic acid, for example, more particularly formic acid, acetic acid or lactic acid.

Examples of suitable binders for electrocoat materials are known from publications EP 0 082 291A1, EP 0 234 395 A1, EP 0 227 975 A1, EP 0 178 531 A1, EP 0 333 327, EP 0 310 971 A1, EP 0 456 270 A1, U.S. Pat. No. 3,922,253 A, EP 0 261 385 A1, EP 0 245 786 A1, EP 0 414 199 A1, EP 0 476 514 A1, EP 0 817 684 A1, EP 0 639 660 A1, EP 0 595 186 A1, DE 41 26 476 A1, WO 98/33835, DE 33 00 570 A1, DE 37 38 220 A1, DE 35 18 732 A1 or DE 196 18 379 A1. These are preferably resins which contain primary, secondary, tertiary or quaternary amino or ammonium groups and/or tertiary sulfonium groups and have amine numbers preferably of between 20 and 250 mg KOH/g and a weight-average molecular weight of 300 to 10,000 Daltons. Use is made more particularly of amino (meth)acrylate resins, amino-epoxy resins, amino-epoxy resins with terminal double bonds, amino-epoxy resins with primary and/or secondary hydroxyl groups, amino-polyurethane resins, amino-containing polybutadiene resins or modified epoxy resin/carbon dioxide/amine reaction products. Examples of suitable reactive functional groups are hydroxyl groups, thiol groups, and primary and secondary amino groups, more particularly hydroxyl groups.

The electrocoat materials of the invention may further comprise at least one typical and known additive (c), selected from the group consisting of catalysts, pigments, anticrater additives, polyvinyl alcohols, thermally curable reactive diluents, molecularly dispersely soluble dyes, light stabilizers, such as UV absorbers and reversible free-radical scavengers (HALS), antioxidants, low-boiling and high-boiling ("long") organic solvents, devolatilizers, wetting agents, emulsifiers, slip additives, polymerization inhibitors, thermolabile free-radical initiators, adhesion promoters, flow control agents, film-forming assistants, flame retardants, corrosion inhibitors, free-flow aids, waxes, siccatives, biocides, and matting agents, in amounts of 0 to 30% by weight, based on the total amount of the electrocoating material.

Pigments are preferred additives employed. Preferably the pigments are selected from the group consisting of typical and known coloring, effect, electrically conductive, magnetically shielding, fluorescent, extending, and corrosion-inhibiting organic and inorganic pigments. The pigments are preferably introduced into the electrocoating material as a pigment paste or pigment preparation. Said pigment paste is prepare by grinding a resin (so called grinding resin) with the respective pigment and a solvent, preferably water. Suitable grinding resins are, for example, described in EP 505 445 B1. Particularly preferred pigment pastes additionally contain at least one bismuth compound, preferably bismuth subnitrate of the empirical formula 4(BiNO₃(OH)₂)BiO(OH). Preparation of suitable pigment pastes containing bismuth compounds, for example bismuth subnitrate, are described in DE 10 2008 016 220 A1.

The electrocoat materials of the invention are produced by mixing and homogenizing the above-described constituents and, if appropriate, using typical and known mixing methods and apparatus such as stirred tanks, agitator mills, extruders, compounders, Ultraturrax, inline dissolvers, static mixers, micromixers, toothed-wheeled dispersers, pressure release nozzles and/or microfluidizers. In this case the pigments are incorporated preferably in the form of pigment pastes or pigment preparations into the electrocoat materials.

The electrocoat materials of the invention preferably have a solids content of 5% to 50%, preferably 5% to 35% by weight. The solids here is the fraction of an electrocoat material that builds the electrocoat produced from the material.

The electrocoating materials containing the inventive compound (X) as crosslinker can be used to coat an electrically conductive substrate which is connected to a current circuit as cathode. The application of the electrocoating material to the substrate, or the production of a coating film on the substrate, are understood as follows: the electrocoating material (ECM) is applied in such a way that the coating film produced therefrom is arranged on the substrate but need not necessarily be in direct contact with the substrate. Thus, other layers can be present between the coating film and the substrate. For example, a conversion coating, such as a zinc phosphate coating, may be arranged between the substrate and the cured electrocoating layer.

After application of the electrocoating material, the obtained coating layer can be rinsed with water and optionally dried before it is cured. Curing of a the electrocoating film is understood to mean the conversion of such a film to the ready-to-use state, i.e. to a state in which the substrate provided with the respective coating film can be transported, stored and used as intended. More particularly, a cured coating film is no longer soft or tacky, but has been conditioned as a solid coating film which does not undergo any further significant change in its properties, such as hardness or adhesion on the substrate, even under further exposure to curing conditions. The curing is performed preferably between 100 and 250° C over a period of 5 to 60 minutes.

The cured coating layer preferably has as film thickness of 5 to 50 µm, preferably 10 to 30 µm, very preferably 15 to 25 µm.

What has been said about the preparation of the compound (X) according to the inventive method, the inventive compound (X) as well as the inventive use of compound (X) applies mutatis mutandis with respect to further preferred embodiments of the inventive electrocoating materials comprising compound (X) as crosslinker.

The invention is described in particular by the following embodiments:
Embodiment 1: method for preparing a compound (X) containing fully blocked isocyanate groups and at least one silane group, said method comprising the following steps:
   (a) reacting 0.01 to 5 mol-% of the total amount of free isocyanate groups present in at least one parent structure P with at least one compound of general formula (I)

      HN[X-SiR¹ₐ(OR²)₃₋ₐ]ₙ[X'-SiR¹_{b}(OR²)_{3-b}]ₘ[R³]₂₋₍ₘ₊ₙ₎ (I)

      wherein
      - X, X': represent, independently from each other, linear and/or branched alkylene or cycloalkylene radicals having 1 to 20 carbon atoms;
      - R¹: represents an alkyl, cycloalkyl, aryl, or aralkyl group, it being possible for the carbon chain to be interrupted by nonadjacent oxygen, sulfur, or NRₐ groups, where Rₐ is alkyl, cycloalkyl, aryl, or aralkyl;
      - R²: represents hydrogen, an alkyl, or a cycloalkyl group, it being possible for the carbon chain to be interrupted by nonadjacent oxygen, sulfur or NRₐ groups, where Rₐ is alkyl, cycloalkyl, aryl, or aralkyl;
      - R³: represents a linear and/or branched alkylene or cycloalkylene radicals having 1 to 20 carbon atoms;
      - n,m: are, independently from each other, 0 to 2; and
      - a,b: are, independently from each other 0 to 2;
   (b) reacting the free isocyanate groups of the parent structure P remaining after step (a) with at least one blocking agent BA to obtain the compound (X) comprising fully blocked isocyanate and silane groups; and
   (c) optionally diluting the compound (X) obtained in step (b) with at least one solvent.
Embodiment 2: method according to embodiment 1, characterized in that the at least one parent structure P has an average isocyanate functionality of 2 to 6, preferably of 2 to 5, more preferably of 2 to 4, very preferably of 2.5 to 3.
Embodiment 3: method according to embodiment 1 or 2, characterized in that the at least one parent structure P is selected from the group consisting of (i) aromatic, aliphatic, cycloaliphatic or heterocyclic polyisocyanates; (ii) polyisocyanates derived from said aromatic, aliphatic, cycloaliphatic or heterocylic polyisocyanates by trimerization, dimerization, urethane formation, biuret formation, uretdione formation and/or allophanate formation; and (iii) mixtures thereof, preferably aromatic polyisocyanates.
Embodiment 4: method according to any of the preceding embodiments, characterized in that the at least one parent structure P is a polyisocyanate of the general formula (II) 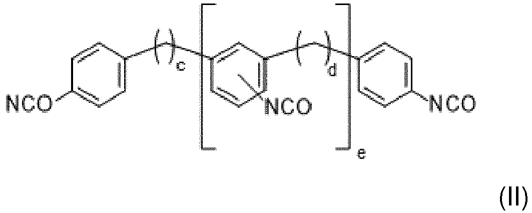 wherein
   - c, d: are, independently from each other, integral numbers of 1 to 5, preferably 1 to 3, very preferably 1; and
   - e: is 0 to 4, preferably 0 or 1 to 4.
Embodiment 5: method according to any of the preceding embodiments, characterized in that the parent structure P is a mixture of a first polyisocyanate P1 and a second polyisocyanate P2.
Embodiment 6: Method according to embodiment 5, characterized in that the of a first polyisocyanate P1 is a polyisocyanate of general formula (II) with c = 1 and e = 0 and the second polyisocyanate P2 is a polyisocyanate of general formula (II) with c = d = 1 and e = 1 to 4.
Embodiment 7: method according to any of the preceding embodiments, characterized in that X and X' in formula (I) represent, independently from each other, a linear alkylene radical having 1 to 10, preferably 1 to 6, more preferably 2 to 5, very preferably 3, carbon atoms.
Embodiment 8: method according to any of the preceding embodiments, characterized in that R² in formula (I) represent, independently from each other, a C₁-C₁₀ alkyl group, preferably a C₁-C₆ alkyl group, very preferably a C₁ alkyl group.
Embodiment 9: method according to any of the preceding embodiments, characterized in that R³ in formula (I) represents a linear C₁-C₁₀ alkyl group, preferably a linear C₁-C₆ alkyl group, very preferably a linear C₄ alkyl group.
Embodiment 10: method according to any of the preceding embodiments, characterized in that m and n in formula (I) are, independently from each other, 1 or in that m in formula (I) is 1 and n in formula (I) is 0.
Embodiment 11: method according to any of the preceding claims, characterized in that a and b in formula (I) are, independently from each other, 0.
Embodiment 12: method according to any of the preceding claims, characterized in that 0.5 to 4.5 mol-%, preferably 0.5 to 4 mol-%, more preferably 0.5 to 3. mol-%, very preferably 0.7 to 2.5 mol-%, of the total amount of free isocyanate groups present in the at least one parent structure P are reacted in step (a) with at least one compound of general formula (I).
Embodiment 13: method according to any of the preceding claims, characterized in that a bismuth catalyst of general formula (III) is used in step (a)

   Bi[OOC(C_{c}H_{2c+1})]₃ (III)

   wherein
   c is 5 to 15, preferably 7 to 13, very preferably n = 7.
Embodiment 14: method according to any of the preceding embodiments, characterized in that 95 to 99.99 mol-%, preferably 95.5 to 99.5 mol-%, more preferably 96 to 99.5 mol-%, even more preferably 97 to 99.5 mol-%, very preferably 97.5 to 99.3 mol-%, of the total amount of free isocyanate groups present in the parent structure P are reacted in step (b) with at least one blocking agent BA.
Embodiment 15: method according to any of the preceding embodiments, characterized in that the at least one blocking agent BA is selected from the group consisting of (i) C₁-C₄ dialkyl malonates; (ii) ketoximes such as methyl ethyl ketoxime, methyl amyl ketoxime and methyl isobutyl ketoxime; (iii) alcohols such as butylglycol, dipropylene glycol methyl ether, isopropanol or tert-butanol; (iv) oximes such as formaldoxime, acetaldoxime, butanone oxime, cyclohexanone oxime, acetophenone oxime, benzophenone oxime or diethyl glyoxime; (v) lactams such as ε-caprolactam or δ-valerolactam; (vi) phenols such as phenol or cresol; (vii) N-alkyl amides such as N-methyl acetamide; (viii) imides such as phthalimide; (ix) imidazole; (x) C₁-C₁₂ alkyl or alkoxyalkyl esters of acetoacetic acid; (xi) pyrazoles and triazoles such as 1,2-pyrazole, 3,5-dimethyl pyrazole or 1,2,4-triazole; (xii) secondary amines such as diisopropyl amine; and (xiii) mixtures thereof, preferably alcohols.
Embodiment 16: method according to any of the preceding embodiments, characterized in that the at least one blocking agent BA is selected from primary and/or secondary alcohols of general formula (IV) 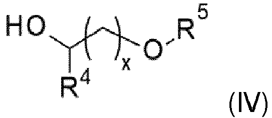 wherein
   - R⁴: represents hydrogen or a C₁-C₄ alkyl residue, preferably hydrogen or a C₁ alkyl residue;
   - R⁵: represents a linear or branched C₁-C₁₀ alkyl residue or a residue *-(CH₂)ₓ-CH(CH₃)-O-R⁶ attached via * to the oxygen atom, preferably a linear C₄ alkyl residue or a residue*-(CH₂)ₓ-CH(CH₃)-O-R⁶ attached via * to the oxygen atom;
   - R⁶: represents a C₁-C₄ alkyl residue, preferably a C₁ alkyl residue; and
   - x: is 1 to 5, preferably 1.
Embodiment 17: method according to any of the preceding embodiments, characterized in that a first blocking agent BA1 and a second blocking agent BA2 are used in step (b).
Embodiment 18: method according to embodiment 17, characterized in that the first blocking agent BA1 is a compound of general formula (IV) with R⁴ = H and R⁵ = C₄ alkyl and the second blocking agent BA2 is a compound of general formula (IV) with R⁴ = CH₃, R⁵ = *-(CH₂)ₓ-CH(CH₃)-O-R⁶, R⁶ = CH₃ and x = 1.
Embodiment 19: method according to embodiments 17 or 18, characterized in that 50 to 75 mol-%, preferably 60 to 70 mol-%, very preferably 66 to 69 mol-%, of the total amount of free isocyanate groups present in the at least one parent structure P are reacted in step (b) with the first blocking agent BA1.
Embodiment 20: method according to any of embodiments 17 to 19, characterized in that 20 to 35 mol-%, preferably 25 to 35 mol-%, very preferably 28 to 30 mol-%, of the total amount of free isocyanate groups present in the at least one parent structure P are reacted in step (b) with the second blocking agent BA2.
Embodiment 21: method according to any of the preceding embodiments, characterized in that the solvent used in step (c) is selected from the group consisting of secondary alcohols and/or ethers, preferably butoxy propanol, phenoxy propanol and bis(2-(2-butoxyethoxy)ethoxy)methane.
Embodiment 22: compound (X) containing fully blocked isocyanate groups and at least one silane group, obtained by the method as claimed according to any of embodiments 1 to 21.
Embodiment 23: compound (X) containing fully blocked isocyanate and silane groups according to embodiment 22, characterized in that the compound (X) has a weight average molecular weight M_{w} of 1,000 to 2,500 g/mol, preferably 1,200 to 2,000 g/mol, very preferably 1,300 to 1,500 g/mol, as determined by gel permeation chromatography according to ISO 13885-1:2008-08.
Embodiment 24: compound (X) containing fully blocked isocyanate and silane groups according to embodiment 22 or 23, characterized in that the compound (X) has a number average molecular weight Mₙ of 900 to 1,500 g/mol, preferably 950 to 1,100 g/mol, very preferably 970 to 1,050 g/mol, as determined by gel permeation chromatography according to ISO 13885-1:2008-08.
Embodiment 25: compound (X) containing fully blocked isocyanate and silane groups according to any of embodiments 22 to 24, characterized in that the compound (X) has a viscosity (60% by weight of a solution in butoxy propanol) of 200 to 350 mPa*s, preferably of 215 to 300 mPa*s, as determined with a Brookfield CAP2000+ viscosimeter, cone plate configuration, cone CAP 03, at 23°C and a shear rate of 5,000 s⁻¹.
Embodiment 26: use of a compound (X) containing fully blocked isocyanate groups and at least one silane group according to any of embodiment 22 to 25 as crosslinker in aqueous electrocoating materials.
Embodiment 27: aqueous electrocoating material comprising
   (a) at least one binder containing cationic or anionic groups and reactive functional groups which are able to undergo crosslinking reactions with complementary reactive functional groups present in a crosslinking agent (b),
   (b) at least one compound (X) containing fully blocked isocyanate groups and at least one silane group according to any of embodiments 22 to 25 as crosslinking agent, and
   (c) optionally at least one additive.

### Examples

The present invention will now be explained in greater detail through the use of working examples, but the present invention is in no way limited to these working examples. Moreover, the terms "parts", "%" and "ratio" in the examples denote "parts by mass", "mass %" and "mass ratio" respectively unless otherwise indicated.

### 1. Methods of determination:

### 1.1 Solids content (solids, nonvolatile fraction)

The nonvolatile fraction is determined according to DIN EN ISO 3251 (date: June 2008). It involves weighing out 1 g of sample into an aluminum dish which has been dried beforehand, drying it in a drying oven at 130°C for 60 minutes, cooling it in a desiccator and then reweighing it. The residue relative to the total amount of sample used corresponds to the nonvolatile fraction.

### 1.2 Determination of viscosity

The viscosity of compounds (X) as well as the binder resin used to prepare the aqueous electrocoating materials was determined at 23 °C using a shear rate of 10,000 s⁻¹ or 5,000 s⁻¹ according to DIN EN ISO 3219:1994-10 and DIN 53019-2:2001-02 with a Brookfield CAP2000+ viscosimeter; cone plate configuration; Cone CAP 03.

The viscosity of aqueous electrocoating materials was determined at 23 °C using a shear rate of 150 s⁻¹ according to DIN EN ISO 3219:1994-10 and DIN 53019-2:2001-02 with a Rotation viscosimeter Rheolab QC; cylinder geometry; cylinder Z3.

### 1.3 Determination of molecular weight

The molecular weight of the compounds (X) was determined according to ISO 13885-1:200801 using polystyrene standards for calibration as well as the following equipment and parameters:
Agilent 1100 series including pump, automatic sampler and refractive index detector PSS-WIN GPC computer aided system
Columns: combination of PSS SDV 5 µm 10e5/10e4/10e3, 300 mm, 8 mm ID
Eluent: tetrahydrofuran with 0,1mol/l acetic acid
Injector volume: 100 µl; temperature: 35 °C; flow rate: 1,0 ml/min; run time: 40 min.

### 1.4 Determination of acidic acid salt spray mist test to DIN EN ISO 9227 AASS

The acidic acid salt spray mist test is used for determining the corrosion resistance of a coating on a substrate. In accordance with DIN EN ISO 9227 (date: June 2017), the acidic acid salt spray mist test is carried out for corresponding coated electrically conductive substrates, namely cold-rolled steel (CRS). The samples for investigation here are in a chamber in which there is continuous misting with a 5% common salt solution with a controlled pH in the range from 3.1 to 3.3 at a temperature of 35°C over a duration of 1008 hours. The mist deposits on the samples under investigation, covering them with a corrosive film of salt water.

Prior to the acidic acid salt spray mist test to DIN EN ISO 9227 AASS, the coatings on the samples under investigation are scored down to the substrate with a blade incision, allowing the samples to be investigated for their level of under-film corrosion (undermining) to DIN EN ISO 4628-8 (date: March 1, 2013), since the substrate corrodes along the score line during the DIN EN ISO 9227 AASS salt spray mist test. As a result of the progressive process of corrosion, the coating is undermined to a greater or lesser extent during the test. The degree of undermining in [mm] is a measure of the resistance of the coating to corrosion. The average undermining level stated in the results later on below represents the average value of the individual values from three to five different panels assessed, with each individual value for a panel in turn being an average value of the undermining levels at 11 measurement points on the panel.

### 1.5 VDA alternating climate test to VDA DIN EN ISO 11997-1 (Jan 2018, cycle B)

This alternating climate test is used for determining the corrosion resistance of a coating on a substrate. The alternating climate test is carried out for the correspondingly coated substrate, namely cold-rolled steel (CRS). The alternating climate test here is carried out in 10 cycles. One cycle here consists of a total of 168 hours (1 week) and encompasses
a) 24 hours of salt spray mist testing as per DIN EN ISO 9227 NSS (date: September 1, 2012),
b) followed by 8 hours of storage, including heating, as per DIN EN ISO 6270-2 of September 2005, AHT method,
c) followed by 16 hours of storage, including cooling, as per DIN EN ISO 6270-2 of September 2005, AHT method,
d) 3-fold repetition of b) and c) (hence in total 72 hours), and
e) 48 hours of storage, including cooling, with an aerated climate chamber as per DIN EN ISO 6270-2 of September 2005, AHT method.

The respective coating on the samples under investigation is scored down to the substrate with a bladed incision prior to the implementation of the alternating climate test, thus allowing the samples to be investigated for their level of under-film corrosion (undermining) to DIN EN ISO 4628-8 (date: March 1, 2013), since the substrate corrodes along the score line during the performance of the alternating climate test. As a result of the progressive process of corrosion, the coating is undermined to a greater or lesser extent during the test. The degree of undermining in [mm] is a measure of the resistance of the coating to corrosion. The average undermining level stated in the results later on below represents the average value of the individual values from three to five different panels assessed, with each individual value for a panel in turn being an average value of the undermining levels at 11 measurement points on the panel.

### 1.6. Alternating climate test PV 1210

This alternating climate test PV 1210 is used for determining the corrosion resistance of a coating on a substrate. The alternating climate test is carried out for corresponding coated electrically conductive substrates composed of hot-dip-galvanized steel (HDG). The alternating climate test here is carried out in 30 cycles. One cycle (24 hours) here consists of 4 hours of salt spray mist testing as per DIN EN ISO 9227 NSS (June 2017), 4 hours of storage, including cooling as per DIN EN ISO 6270-2 of September 2005 (AHT method) and 16 hours of storage, including heating, as per DIN EN ISO 6270-2 of September 2005, AHT method, at 40 ± 3°C and at atmospheric humidity of 100%. After each 5 cycles there is a pause of 48 hours, including cooling, as per DIN EN ISO 6270-2 of September 2005, AHT method. 30 cycles therefore correspond to a total duration of 42 days.

The respective coating on the samples under investigation is scored down to the substrate with a bladed incision prior to the implementation of the alternating climate test, thus allowing the samples to be investigated for their level of under-film corrosion (undermining) to DIN EN ISO 4628-8 (date: March 1, 2013), since the substrate corrodes along the score line during the performance of the alternating climate test. As a result of the progressive process of corrosion, the coating is undermined to a greater or lesser extent during the test. The degree of undermining in [mm] is a measure of the resistance of the coating to corrosion. The average undermining level stated in the results later on below represents the average value of the individual values from three to five different panels assessed, with each individual value for a panel in turn being an average value of the undermining levels at 11 measurement points on the panel.

### 1.7 Copper-accelerated acetic acid salt spray mist testing to DIN EN ISO 9227 CASS

The copper-accelerated acetic acid salt spray mist test as well is used for determining the corrosion resistance of a coating on a substrate. The copper-accelerated acetic acid salt spray mist test is carried out, in accordance with DIN EN ISO 9227 CASS, for correspondingly coated, electrically conductive substrates of aluminum (AA6014 (ALU)). The samples under investigation are in a chamber in which there is continuous misting with a 5% common salt solution of controlled pH at a temperature of 50°C over a duration of 240 hours, with copper chloride and acetic acid added to the salt solution. The mist deposits on the samples under investigation, covering them with a corrosive film of salt water.

The respective coating on the samples under investigation is scored down to the substrate with a bladed incision prior to the copper-accelerated acetic acid salt spray mist test as per DIN EN ISO 9227 CASS, thus allowing the samples to be investigated for their level of under-film corrosion (undermining) to DIN EN ISO 4628-8, since the substrate corrodes along the score line during the DIN EN ISO 9227 CASS copper-accelerated acetic acid salt spray mist test. As a result of the progressive process of corrosion, the coating is undermined to a greater or lesser extent during the test. The degree of undermining in [mm] is a measure of the resistance of the coating to corrosion. The average undermining level stated in the results later on below represents the average value of the individual values from three to five different panels assessed, with each individual value for a panel in turn being an average value of the undermining levels at 11 measurement points on the panel.

In addition to the undermining, the number of delamination sites on the overall surface of the panel is also reported (these being, then, nucleation points at which detachment of the coating has taken place). This number as well is stated as the average of the individual numbers from three to five individual panels.

### 1.8 Filiform corrosion test according to DIN EN 3665

The evaluation of filiform corrosion is used for the determination of the corrosion resistance of a coating on a metal substrate. The filiform corrosion test is carried out, in accordance with DIN EN 3665 (date: August 1, 1998), for correspondingly coated, electrically conductive substrates of aluminum (AA6014 (ALU)). The test is carried out for 1008 h and comprises two steps. In a first step the coated test panels which have an artificial scribe are exposed to a hydrochloride acid steam for 30 min. After the first step, the coated test panels are placed in a chamber at 80 % relative humidity and 40 °C for 1008 h. The occurring corrosion becomes visible as worm-like filaments that grow from the scribe. The maximum filament length is detected according to DIN EN 3665 (Procedure 3) and is an indicator for the resistance of the coating against filiform corrosion.

### 1.10 Determination of "edge cover index"

The determination of the edge cover index is used to evaluate the coverage of a metal substrate edge with a coating.

A sliding contact (pin) is drawn along the respective test panel correspondingly coated, parallel to the edge, at a constant speed and exerting little tracking force on the panel. Between pin and substrate, there is an adjustable voltage source (0 - 1,000 V) with high internal resistance (10 MΩ). The voltage/time integral between pin and test panel is measured while the sliding contact travels a certain distance. This integral depends on the contact resistance between pin and substrate. The contact resistance is highly dependent on voltage; high voltage punctures occur as a function of the thickness of the isolation layers. The measurement of the voltage/time integral at different voltages provides a value for the isolation of the edge by the cured electrocoat and is therefore a measure for the edge protection achieved with the respective cured electrocoat. Measurements are performed on opposite sides of the substrate using voltages of 50 V, 100 V, 200 V, 400 V and 1,000 V. The edge cover index is representing the mean value of all voltage/time integrals obtained after measuring both sides of the corresponding test panel at all voltages previously stated.

### 2. Preparation of inventive compounds (X)

The following should be taken into account regarding the formulation constituents and amounts thereof as indicted in the tables hereinafter. When reference is made to a commercial product or to a preparation protocol described elsewhere, the reference, independently of the principal designation selected for the constituent in question, is to precisely this commercial product or precisely the product prepared with the referenced protocol.

The inventive compounds (X-I1) to (X-I6) containing fully blocked isocyanate groups as well as silane groups were prepared using the ingredients stated in Table 1 below according to the following general procedure:
A solution of the isocyanate containing parent structure (Lupranat® M 20 S supplied by BASF SE) and the bismuth catalyst (K-Kat 348 supplied by King Industries, Inc) in Mazon 1651 (supplied by BASF SE) was heated to 37 °C before the respective silane compound of general formula (I) was added over a period of 10 minutes. After addition of the silane compound of general formula (I) was complete, a mixture of the respective blocking agents was added over a period of 3 hours while gradually warming the reaction mixture to 80 °C. Then, the reaction mixture was cooled and butoxy propanol and phenoxy propanol were added to the prepared respective compound containing fully blocked isocyanate groups as well as silane groups.

**Table 1: Ingredients to prepare inventive compounds (X-I1) to (X-I6)**

| # | **Ingredient** | **X-I1** | **X-I2** | **X-I3** | **X-I4** | **XI-5** | **X-I6** |
|---|---|---|---|---|---|---|---|
| 1 | Lupranat® M 20 S ¹⁾ | 43.162 | 42.905 | 41.018 | 43.287 | 42.147 | 43.295 |
| 2 | K-Kat 348 ²⁾ | 0.0190 | 0.019 | 0.018 | 0.019 | 0.018 | 0.019 |
| 3 | Mazon 1651 | 2.514 | 2.514 | 2.514 | 2.514 | 2.514 | 2.514 |
| 4 | Silane compound SC1 of formula (I) ³⁾ | 1.820 | - | 8.647 | 0.912 | - | - |
| 5 | Silane compound SC2 of formula (I) ⁴⁾ | | 2.940 | - | - | 5.776 | 1.483 |
| 6 | Blocking agent BA1 ⁵⁾ | 25.823 | 25.044 | 23.344 | 25.140 | 23.986 | 25.587 |
| 7 | Blocking agent BA2 ⁶⁾ | 14.195 | 14.111 | 11.991 | 15.660 | 13.091 | 14.635 |
| 8 | Butoxy propanol | 6.233 | 6.234 | 6.234 | 6.233 | 6.234 | 6.233 |
| 9 | Phenoxy propanol | 6.233 | 6.234 | 6.234 | 6.233 | 6.234 | 6.233 |

| | | | | | | | |
|---|---|---|---|---|---|---|---|
| ¹⁾ mixture of polyisocyanate P1 of the general formula (II) with c = 1 and e = 0 and polyisocyanate P2 of general formula (II) with c = d = 1 and e = 1 to 4, ²⁾ Bismuth(III) 2-ethylhexanoate (70-75% in xylenes), ³⁾ X = X' = linear alkylene radical having 3 carbon atoms, R² = C₁ alkyl group, m = n = 1 and a = b = 0, ⁴⁾ X = X' = linear alkylene radical having 3 carbon atoms, R² = C₁ alkyl group, R³ = linear C₄ alkyl group, m = 1, n = 0 and a = b = 0, ⁵⁾ compound of general formula (IV) with R⁴ = H and R⁵ = C₄ alkyl, ⁶⁾ compound of general formula (IV) with R⁴ = CH₃, R⁵ = *-(CH₂)ₓ-CH(CH₃)-O-R⁶, R⁶ = CH₃ and x = 1, | | | | | | | |

**Table 2: Properties of prepared compounds (X-I1) to (X-I6)**

| | **X-I1** | **X-I2** | **X-I3** | **X-I4** | **X-I5** | **X-I6** |
|---|---|---|---|---|---|---|
| EQ NCO ¹⁾ | 6.0 | 6.0 | 6.0 | 6.0 | 6.0 | 6.0 |
| Mol.-% silane compound SC1 of formula (I) ²⁾ | 1.7 | - | 8.3 | 0.83 | - | - |
| Mol.-% silane compound SC1 of formula (I) ³⁾ | - | 3.3 | - | - | 6.7 | 1.7 |
| Mol.-% BA1 ⁴⁾ | 68.3 | 66.7 | 65.0 | 66.34 | 65.0 | 67.5 |
| Mol.-% BA2 ⁴⁾ | 30.0 | 30.0 | 26.7 | 32.83 | 28.3 | 30.8 |
| Solids content [%] | 85.7 | 85.3 | 84.4 | 85.7 | 83.2 | 85.9 |
| M_{w} | 1349 | 1449 | n.d ⁵⁾ | n.d ⁵⁾ | n.d ⁵⁾ | n.d ⁵⁾ |
| Mₙ | 982 | 1017 | n.d ⁵⁾ | n.d ⁵⁾ | n.d ⁵⁾ | n.d ⁵⁾ |
| Viscosity [mPa*s] (60% in butoxy propanol) | 221 | 254 | 281 | 307 | 297 | 316 |

| | | | | | | |
|---|---|---|---|---|---|---|
| ¹⁾ NCO equivalents of parent structure P (Lupranat® M 20 S) used to prepare respective compound (X) ²⁾ X = X' = linear alkylene radical having 3 carbon atoms, R² = C₁ alkyl group, m = n = 1 and a = b = 0, ³⁾ X = X' = linear alkylene radical having 3 carbon atoms, R² = C₁ alkyl group, R³ = linear C₄ alkyl group, m = 1, n = 0 and a = b = 0, ⁴⁾ based on the total amount of free NCO groups of the parent structure P (Lupranat® M 20 S), ⁵⁾ not determined | | | | | | |

### 3. Preparation of aqueous electrocoating materials (EM)

The aqueous electrocoating materials (EM) were prepared by mixing an aqueous dispersion of binder and crosslinker (abbreviated as (AD)) with a pigment paste and further additives as described below.

### 3.1 Preparation of aqueous dispersion of binder and crosslinker (AD) used in electrocoating materials

### 3.1.1 Comparative aqueous dispersion of binder and crosslinker (AD-C)

The commercially available product Cathoguard® 800 from BASF Coatings GmbH having a solids content of 37.5 % is used as comparative aqueous dispersion of a binder resin and crosslinker (AD-C).

### 3.1.2 Aqueous dispersion of binder and inventive crosslinkers (AD-11) to (AD-I6)

The aqueous dispersions (AD-11) to (AD-I6) of a binder resin and inventive crosslinker (X-I1) to (X-I6) was prepared according to EP 0 961 797 A1, "Binder dispersion C" with the following deviation: the crosslinker described in EP 0 961 797 A1 was substituted with an equal amount of the respective inventive crosslinker (X-11) to (X-I6) prepared according to point 2 above.

### 3.2 General procedure to prepare aqueous electrocoating materials (EM)

2736.05 g of an aqueous dispersion of a binder resin and a crosslinker (AD), 393.06 g of a pigment paste (commercially available product CathoGuard® 800 from BASF with a solid content of 65.5 %), 1702.38 g of bicine (N,N'-Bis(2-hydroxyethyl)glycine) in water (77.38 g bicine in 1625 g water), 325 g of a lithium acetate solution (2,61 g lithium acetate dihydrate in 322.39 g water), 325 g of a copper nitrate solution (2.47 g copper(II)nitrate trihydrate in 322.53 g water), 32.5 g of an edge protection additive and 986 g water are added to prepare the electrocoating material (EM). The bicine solution, the lithium acetate solution and the copper nitrate solution are each prepared separately and then added to the initial charge comprising the binder resin, the crosslinker and the pigment paste. The complete mixture is stirred at 18 °C to 23 °C for 24 hours.

### 3.2.1 Preparation of inventive electrocoating materials (EM-I1) to (EM-I6)

Inventive electrocoating materials (EM-I1) to (EM-I6) were obtained by using the aqueous dispersions of a binder resin and inventive crosslinkers (AD-11) to (AD-I6).

### 3.2.2 Preparation of comparative electrocoating material (EM-C)

Comparative electrocoating material (EM-C) was obtained by using the aqueous dispersion (AD-C) of a binder resin and a fully blocked isocyanate crosslinker not containing any silane compound prepared according to point 3.1.1.

### 4. Deposition of electrocoating materials (EM-C) and (EM-I1) to (EM-I6) on various substrates

The aqueous electrocoating materials (EM-C) and (EM-I1) to (EM-I6) prepared according to point 3 were each applied as dipped coatings to various substrates. Each of the materials here is applied to the various substrates immediately after its production as described above.

Three kinds of metal test panels are used to evaluate the corrosion resistance, these being hot-dip-galvanized steel (HDG), aluminum 6014 (ALU) and cold-rolled steel (CRS).

These panels are first of all each cleaned by immersion into a bath comprising an aqueous solution comprising the commercially available product Gardoclean S5160 from Chemetall and also water (97.7 wt%) for a duration of 2 minutes at a temperature of 60°C. The substrates cleaned in this way are subsequently rinsed with water.

Immediately thereafter, each aqueous electrocoating compositions prepared in point 3 is applied to each panel, with the respective panel being immersed in each case into a corresponding dip-coating bath comprising one of the compositions. This dip-coating bath has a respective temperature of 32°C.

Coating in the dip-coating bath is carried out by means of a two-stage deposition step comprising steps (1a) and (1b), where first of all, galvanostatically, current strengths in the range from 0.02 to 0.32 A or, potentiostatically, a voltage of 4 V are applied, in each case over a duration of 120 seconds (corresponding to stage (1a)). Subsequent to this, stage (1b) is carried out, with application either potentiostatically of a voltage of 4 V or galvanostatically of current strengths in the range of 0.12 to 0.28 A, which in each case within stage (1b) are increased continuously, linearly, to a voltage in the range of 200-220 V, in each case over a duration of 30 seconds, by means of a voltage ramp. This respective voltage is then maintained for a duration of 90 seconds (hold time) to give (after the subsequent curing) a coating of the respective substrate in a dry film thickness of 17 to 22 micrometers. The test panels are subsequently cured for 25 minutes in an oven (175°C unless explicitly stated otherwise).

### 5. Investigation of the corrosion prevention effect of the coated substrates

The substrates obtained according to point 4 are investigated for their corrosion resistance and edge protection properties. Outstanding resistance is achieved for average underminings of around 1 mm. Moreover, differences in the absolute range by about 1 mm are difficult to evaluate technically and are therefore not meaningful. Outstanding edge protection is obtained if the mean value for the edge cover index is 100 while no edge protection is obtained if said mean value is 0. The results are shown in Tables 3 and 4.

**Table 3: Results of corrosion tests for test panels prepared with electrocoating materials (EM-C), (EM-I1) and (EM-I2) (all values are in [mm])**

| | Electrocoating material EM used to prepare respective test panels | | |
|---|---|---|---|
| | EM-C | EM-I1* | EM-I2* |
| Average undermining AASS (substrate CRS) | 7.4 | 2.3 | 3.0 |
| Average undermining VDA (substrate CRS) | 5.3 | 2.8 | 3.9 |
| Average undermining PV 1210 (substrate HDG) | 4.9 | 4.9 | 5.9 |
| Average undermining CASS (substrate ALU) | 1.3 | 1.0 | 1.0 |
| Maximum filament length FCC (substrate ALU) | 3.6 | 2.8 | 3.5 |

| | | | |
|---|---|---|---|
| * inventive | | | |

**Table 4: Results of edge protection measurements for test panels prepared with electrocoating materials (EM-C) and (EM-I1) to (EM-I6)**

| | Electrocoating material EM used to prepare respective test panels | | | | | | |
|---|---|---|---|---|---|---|---|
| | EM-C | EM-I1* | EM-I2* | EM-I3* | EM-I4* | EM-I5* | EM-I6* |
| Dry film thickness [µm] | 20.9 | 20.7 | 19.7 | 19.0 | 20.1 | 21.6 | 19.9 |
| Edge cover index (mean value) | 63 | 88 | 85 | 85 | 87 | 71 | 83 |

| | | | | | | | |
|---|---|---|---|---|---|---|---|
| * inventive | | | | | | | |

The results shown in Tables 3 and 4 demonstrate that cured electrocoats obtained from inventive aqueous electrocoating materials (EM-I1) and (EM-I2) have significantly improved corrosion resistance in the AASS and VDA test and comparable corrosion resistance in all further tests when compared to cured electrocoats prepared from the comparative electrocoating material (EM-C) comprising a crosslinker not containing any silane compounds. Moreover, the electrocoats prepared from inventive aqueous electrocoating compositions (EM-I1) to (EM-I6) have an improved edge protection when compared to cured electrocoats prepared from the comparative electrocoating material (EM-C). Thus, a higher corrosion resistance in combination with a better edge protection can be achieved if the aqueous electrocoating material contains the inventive fully blocked isocyanate crosslinker (X) additionally containing small amounts of a silane compound.

## Claims

1. Method for preparing a compound (X) containing fully blocked isocyanate groups and at least one silane group, said method comprising the following steps:
(a) reacting 0.01 to 5 mol-%of the total amount of free isocyanate groups present in at least one parent structure P with at least one compound of general formula (I)
HN[X-SiR¹ₐ(OR²)₃₋ₐ]ₙ[X'-SiR¹_{b}(OR²)_{3-b}]ₘ[R³]₂₋₍ₘ₊ₙ₎ (I)
wherein
X, X' represent, independently from each other, linear and/or branched alkylene or cycloalkylene radicals having 1 to 20 carbon atoms;
R¹ represents an alkyl, cycloalkyl, aryl, or aralkyl group, it being possible for the carbon chain to be interrupted by nonadjacent oxygen, sulfur, or NRₐ groups, where Rₐ is alkyl, cycloalkyl, aryl, or aralkyl;
R² represents hydrogen, an alkyl, or a cycloalkyl group, it being possible for the carbon chain to be interrupted by nonadjacent oxygen, sulfur or NRₐ groups, where Rₐ is alkyl, cycloalkyl, aryl, or aralkyl;
R³ represents a linear and/or branched alkylene or cycloalkylene radicals having 1 to 20 carbon atoms;
n,m are, independently from each other, 0 to 2; and
a,b are, independently from each other 0 to 2;
(b) reacting the free isocyanate groups of the parent structure P remaining after step (a) with at least one blocking agent BA to obtain the compound (X) comprising fully blocked isocyanate and silane groups; and
(c) optionally diluting the compound (X) obtained in step (b) with at least one solvent.

2. Method according to claim 1, **characterized in that** the at least one parent structure P has an average isocyanate functionality of 2 to 6, preferably of 2 to 5, more preferably of 2 to 4, very preferably of 2.5 to 3.

3. Method according to claim 1 or 2, **characterized in that** the parent structure P is a mixture of a first polyisocyanate P1 and a second polyisocyanate P2.

4. Method according to any of the preceding claims, **characterized in that** X and X' in formula (I) represent, independently from each other, a linear alkylene radical having 1 to 10, preferably 1 to 6, more preferably 2 to 5, very preferably 3, carbon atoms.

5. Method according to any of the preceding claims, **characterized in that** R² in formula (I) represent, independently from each other, a C₁-C₁₀ alkyl group, preferably a C₁-C₆ alkyl group, very preferably a C₁ alkyl group.

6. Method according to any of the preceding claims, **characterized in that** R³ in formula (I) represents a linear C₁-C₁₀ alkyl group, preferably a linear C₁-C₆ alkyl group, very preferably a linear C₄ alkyl group.

7. Method according to any of the preceding claims, **characterized in that** m and n in formula (I) are, independently from each other, 1 or **in that** m in formula (I) is 1 and n in formula (I) is 0.

8. Method according to any of the preceding claims, **characterized in that** a and b in formula (I) are, independently from each other, 0.

9. Method according to any of the preceding claims, **characterized in that** 0.5 to 4.5 mol-%, preferably 0.5 to 4 mol-%, more preferably 0.5 to 3. mol-%, very preferably 0.7 to 2.5 mol-%, of the total amount of free isocyanate groups present in the at least one parent structure P are reacted in step (a) with at least one compound of general formula (I).

10. Method according to any of the preceding claims, **characterized in that** 95 to 99.99 mol-%, preferably 95.5 to 99.5 mol-%, more preferably 96 to 99.5 mol-%, even more preferably 97 to 99.5 mol-%, very preferably 97.5 to 99.3 mol-%, of the total amount of free isocyanate groups present in the parent structure P are reacted in step (b) with at least one blocking agent BA.

11. Method according to any of the preceding claims, **characterized in that** the at least one blocking agent BA is selected from primary and/or secondary alcohols of general formula (IV) 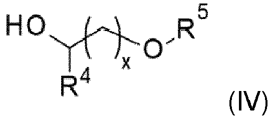 wherein
R⁴ represents hydrogen or a C₁-C₄ alkyl residue, preferably hydrogen or a C₁ alkyl residue;
R⁵ represents a linear or branched C₁-C₁₀ alkyl residue or a residue *-(CH₂)ₓ-CH(CH₃)-O-R⁶ attached via * to the oxygen atom, preferably a linear C₄ alkyl residue or a residue*-(CH₂)ₓ-CH(CH₃)-O-R⁶ attached via * to the oxygen atom;
R⁶ represents a C₁-C₄ alkyl residue, preferably a C₁ alkyl residue; and
x is 1 to 5, preferably 1.

12. Method according to any of the preceding claims, **characterized in that** a first blocking agent BA1 and a second blocking agent BA2 are used in step (b).

13. Compound (X) containing fully blocked isocyanate groups and at least one silane group, obtained by the method as claimed according to any of claims 1 to 12.

14. Use of a compound (X) containing fully blocked isocyanate groups and at least one silane group according to claim 14 as crosslinker in aqueous electrocoating materials.

15. Aqueous electrocoating material comprising
(a) at least one binder containing cationic or anionic groups and reactive functional groups which are able to undergo crosslinking reactions with unblocked isocyanate groups present in a crosslinking agent (b),
(b) at least one compound (X) containing fully blocked isocyanate groups and at least one silane group according to claim 13 as crosslinking agent and
(c) optionally at least one additive.
